# EUROPÄISCHE PATENTSCHRIFT

(11) **EP 3 623 215 B1**
(45) Veröffentlichungstag und Bekanntmachung des Hinweises auf die Patenterteilung: **30.06.2021**
(21) Anmeldenummer: 19196762.9
(22) Anmeldetag: 11.09.2019
(51) Int. Cl.: B60P 1/16, B60P 1/64

(54) **TRANSPORTFAHRZEUG FÜR ABROLLBEHÄLTER**
TRANSPORT VEHICLE FOR ROLLING CONTAINERS
VÉHICULE DE TRANSPORT POUR CONTENEURS ROULANTS

(30) Priorität: 12.09.2018 DE 202018105235 U
(43) Veröffentlichungstag der Anmeldung: 18.03.2020
(73) Patentinhaber: Hüffermann Transportsysteme GmbH, 16845 Neustadt/Dosse (DE)
(72) Erfinder:
(74) Vertreter: Eisenführ Speiser

(56) Entgegenhaltungen:
- EP-A2- 2 993 079
- DE-U1- 8 909 072
- DE-U1-202005 002 137
- DE-U1-202010 005 144
- DE-U1-202012 008 026

## Beschreibung

Die Erfindung betrifft ein Transportfahrzeug und insbesondere einen Kippanhänger für den Transport und das Entleeren von Abrollbehältern.

Der Transport von schuttfähigen Gütern oder Stückgütern ist mit Hilfe von Abrollbehältern möglich. Ein Abrollbehälter ist im Wesentlichen ein quaderförmiger auf einen Unterrahmen montierter Behälter, an dessen Unterrahmen typischerweise im heckseitigen Bereich ein Rollenpaar zum Bewegen des Behälters angebracht ist. Abrollbehälter umfassen im Allgemeinen einen Aufnahmebügel an ihrer Stirnseite sowie Türen am Heck und können anstelle des quaderförmigen Behälters aber auch mit anderen Aufbauten zum Transport unterschiedlicher Güter versehen sein. Spezielle Ausführungen können auch ein zweites Rollenpaar und/oder beidseitig Aufnahmebügel besitzen.

Ladegeräte, genannt Abrollkipper oder konkret auch Hakengerät, heben und ziehen die Abrollbehälter zum Transport auf ein damit ausgerüstetes Fahrzeug und senken und schieben diese zum Abstellen wieder zurück auf den Boden. Mittels des Ladegerätes können Abrollbehälter auch nach hinten gekippt und über die geöffneten Hecktüren entleert werden.

Ein beispielsweise auf einem Lkw montiertes Ladegerät belädt nicht nur das eigene Fahrzeug, sondern kann auch dazu genutzt werden, den Abrollbehälter auf ein anderes dafür geeignetes Fahrzeug beispielsweise einen Anhänger zu schieben und von diesem wieder herunterzuziehen.

Auf diese Weise können Abrollbehälter mit der höheren Wirtschaftlichkeit von Lastzügen gegenüber Solofahrzeugen transportiert werden.

Es sind zwei Konstruktionsprinzipien bzw. Technologien bekannt, mit denen das Übersetzen eines Abrollbehälters von einem Fahrzeug mit Ladegerät auf beispielsweise einen Anhänger bewerkstelligt werden kann: Dazu gehören außenliegende Laufbahnen, meist ausgeführt als großvolumige Kastenprofile, über die der Behälter mit seinen Rollen, geführt durch Zentrierkanten, von der Aufsetzposition in die Transportstellung gerollt wird, wie sie beispielsweise in dem Gebrauchsmuster DE 20 2010 005 144.4 beschrieben sind.

Bei der zweiten Ausführungsform wird der Behälter im Bereich seiner Behälterrollen bzw. mit den Behälterrollen selbst auf einen Schlitten gesetzt und zusammen mit dem Schlitten rollend oder gleitend entlang von Schienenbahnen, die oft durch die Fahrzeuglängsträger gebildet werden, in die Transportstellung und zurück verschoben.

Nach den gleichen Prinzipien, wie für den Anhänger beschrieben, ist es auch möglich, ein mit dem entsprechenden Aufbau versehenen Motorfahrzeug fremd mit einem Abrollbehälter zu beladen.

Beide beschriebenen Konstruktionsausführungen sind bei den Transportanhängern für Abrollbehälter weit verbreitet. Die Systeme werden durch Sicherungseinrichtungen für den Transport wie Verriegelungen und Anschläge ergänzt. Die Schlittenbauart gilt als die Variante mit der kleineren Eigenmasse. Dokument DE 20 2005 002 137 U1 offenbart ein Transportfahrzeug gemäß dem Oberbegriff des Anspruchs 1.

Neben der Entleerungsmöglichkeit mittels des Ladegerätes, beispielsweise mit dem Abrollkipper eines Lkw, können Abrollanhänger einen Behälter auch ohne Umsetzvorgang nach hinten ausschütten, sofern sie mit einer Kippeinrichtung ausgestattet sind. Dazu muss der Abrollbehälter vorn auf dem Anhänger aufgesetzt und zum Fahrzeugheck verschoben sein, sodass sich dort die zu öffnenden Behältertüren befinden.

Zu einer Kippeinrichtung gehören im Wesentlichen eine Kipplagerung am Fahrzeugheck, ein oder mehrere Kippzylinder, angeordnet im Bereich der Behältermitte und annähernd auch in Fahrzeugmitte, sowie ein Kipprahmen, der Kippzylinder und Drehlager verbindet, auf dem der Behälter steht und verriegelt ist.

Die Beschaffenheit typischer Abrollbehälter mit dem außenliegenden Rollenpaar und den innenliegenden Unterrahmen-Längsprofilen hat dazu geführt, dass bei den Kippanhängern für Abrollbehälter das Überschiebeprinzip mit Laufbahnen, über die sich der Behälter mit seinen Rollen bewegt, bevorzugt wird. Der Kipprahmen ist zwischen den Laufrollenbahnen angeordnet, bildet eine Aufstandsfläche für den Behälterunterrahmen und sichert dessen Lage durch im Kipprahmen angeordnete Verriegelungen. Große Profile der Laufbahnen geben dem Kippfahrzeug die gewünschte Stabilität, sind jedoch zusammen mit dem zusätzlichen Kipprahmen auch für die vergleichsweise hohe Eigenmasse verantwortlich.

Aus Skandinavien sind Kippanhängerkonstruktionen bekannt, bei denen der Kipprahmen mit geradem Oberbereich der Kipprahmenlängsträger auf den Fahrzeuglängsträgern mit ebenfalls geradem Obergurt liegt und der Abrollbehälter mittels eines Schlittens auf dem Kipprahmen verschiebbar ist. Der weiter hinten beginnende Kipprahmen mit dem aufgesetzten Schlitten benötigt als Überbrückung zur Anhängerfrontseite beidseitig Laufbahnen, auf denen der Behälter mit seinen Rollen zum Schlitten bewegt wird. Die Laufbahnen gleichen zumindest teilweise auch den Höhenunterschied zwischen der gewünschten niedrigen Aufsetzhöhe der Behälterrollen und der höheren Schlittenposition aus, die aus dem Übereinanderlegen der beiden Rahmen resultiert und auch die Transporthöhe vergrößert.

Ein Ziel der Erfindung ist es, ein verbessertes Transportfahrzeug für Abrollbehälter, insbesondere einen verbesserten Kippanhänger zu schaffen.

Erfindungsgemäß wird dieses Ziel durch ein Transportfahrzeug erreicht, das einen Schlitten, auf den ein Abrollbehälter zum Be- und/oder Entladen des Transportfahrzeugs aufzusetzen ist, und wenigstens einen in Fahrzeuglängsrichtung verlaufenden Fahrzeuglängsträger aufweist, dessen Oberseite wenigstens einen ersten Längsabschnitt einer in Fahrzeuglängsrichtung verlaufenden Schienenbahn bildet, entlang der der Schlitten von einer Behälteraufsetzposition zu einer Behältertransportposition und umgekehrt zu bewegen ist. Der Fahrzeuglängsträger ist Teil des Chassis des Fahrzeugs und bildet typischerweise mit einem weitgehend identischen bzw. spiegelbildlichen zweiten Längsträger zusammen einen Teil eines Fahrzeugrahmens, z.B. eines Leiterrahmens.

Erfindungsgemäß weist das Transportfahrzeug einen Kipprahmen mit wenigstens einem Kipprahmenlängsträger auf, dessen Oberseite einen zweiten Längsabschnitt der Schienenbahn bildet, der sich an den von dem Fahrzeuglängsträger gebildeten ersten Längsabschnitt der Schienenbahn anschließt. Der Kipprahmenlängsträger ist im Bereich eines Fahrzeughecks um eine horizontale und quer zur Fahrzeuglängsachse verlaufende Schwenkachse aus einer Transportstellung, in der der Kipprahmenlängsträger wenigstens stellenweise auf dem Fahrzeuglängsträger aufliegt, in eine Kippstellung schwenkbar.

Der Fahrzeuglängsträger und der zugehörige Kipprahmenlängsträger sind, um gemeinsam die Schienenbahn der Schlittenbewegung zu bilden, zueinander ausgerichtet, verlaufen somit beispielsweise in der gleichen Vertikalebene, d.h. Fahrzeuglängsträger und Kipprahmenlängsträger sind vorzugsweise übereinander - und nicht nebeneinander - angeordnet, gegebenenfalls auch außermittig

Das Transportfahrzeug ist erfindungsgemäß so beschaffen, dass sich in der Transportstellung des Kipprahmenlängsträgers der von dessen Oberseite gebildete zweite Längsabschnitt der Schienenbahn in Fahrzeuglängsrichtung unmittelbar an den ersten, vom Fahrzeuglängsträger gebildeten Längsabschnitt der Schienenbahn anschließt, und dass die Schienenbahn in ihrem von der Oberseite des Kipprahmenlängsträgers gebildeten zweiten Längsabschnitt Teilabschnitte mit unterschiedlicher Steigung aufweist.

Mit einem derartigen Transportfahrzeug ist es möglich, die Eigenmasse des Transportfahrzeugs gegenüber herkömmlichen Transportfahrzeugen mit Kippfunktion für Abrollbehälter zu verkleinern. Außerdem sind vergleichbare Aufsetz- und Transporthöhen wie bei Anhängern ohne Kippeinrichtung erreichbar, wobei die Möglichkeiten einer ansteigenden und absenkenden Bewegungsbahn beim Übersetzvorgang berücksichtigt und genutzt werden kann.

Bevorzugt ist ein Kippanhänger für Abrollbehälter, der mit einem Schlitten ausgerüstet ist, der auf einer Schienenbahn gleitet oder rollt, die mittels Bögen oder abgewinkelter Abschnitte einen Höhenverlauf aufweist. Ein derartiger bevorzugter Kippanhänger hat mindestens einen Längsträger, in der Regel zwei Längsträger. Bei der Beladung mit einem Abrollbehälter wird dieser auf dem Schlitten von der Schlittenausgangsstellung im vorderen Anhängerbereich in die Transport- oder Kippstellung am Heck des Anhängers und für die Fahrzeugentladung wieder in die Schlittenausgangsstellung bewegt. Als Kippanhänger besitzt er einen oder mehrere Kippzylinder, die während des Kippvorganges zur Abrollbehälterentleerung einen Kipprahmen mit dem darauf stehenden Abrollbehälter, um die am Heck des Anhängers angeordnete Kipplagerung in die Kippschrägstellung und zurück zu schwenken.

Bei einem derartigen Transportfahrzeug bilden die Oberbereiche der Fahrzeuglängsträger und der Kipprahmenlängsträger gemeinsam und nacheinander die Schienenbahn für den Schlitten, wobei der Fahrzeuglängsträger im vorderen Teil des Transportfahrzeugs die Schienenbahn für die Schlittenbewegung darstellt und in einem Übergangsbereich die Schienenbahn von dem Fahrzeuglängsträger auf den Kipprahmenlängsträger übergeht. Der Kipprahmenlängsträger ist auf seiner Oberseite mit einer Höhenkontur versehen, die eine Teillänge der gewünschten Höhenkontur der gesamten Schienenbahn bildet und die von Schienenbahnabschnitten mit unterschiedlicher Steigung gebildet ist.

Die Oberseite des Fahrzeuglängsträgers ist vorzugsweise dort, wo sich der Kipprahmen-längsträger in seiner Transportstellung befindet, abgesenkt ausgeführt, so dass der Fahrzeuglängsträger in einem Bereich, in dem sich der Kipprahmenlängsträger in seiner Transportstellung befindet, einen Freiraum bildet. In diesem Freiraum fügt sich der Kipprahmenlängsträger in seiner Transportstellung derart ein, dass sich die von dem Fahrzeuglängsträger gebildete Schienenbahn auf der Oberseite des Kipprahmenlängsträgers fortsetzt.

Besonders vorteilhaft ist es, wenn die Oberseite des Fahrzeuglängsträgers unterhalb des von dem Kipprahmenlängsträger gebildeten zweiten Längsabschnitts der Schienenbahn einen Verlauf hat, der zumindest teilweise einem Verlauf der Unterseite des Kipprahmenlängsträgers entspricht, so dass die Unterseite des Kipprahmenlängsträgers auf der Oberseite des Fahrzeuglängsträgers direkt oder indirekt z.B. über Auflagen aufliegt, wenn sich der Kipprahmenlängsträger in seiner Transportstellung befindet. Das bedeutet, dass die Oberseite des Fahrzeuglängsträgers unterhalb des von dem Kipprahmenlängsträger gebildeten zweiten Längsabschnitts der Schienenbahn gegenüber der übrigen Oberseite des Fahrzeuglängsträgers abgesenkt ist und somit eine abgesenkte Aufnahme für den Kipprahmenlängsträger in diesem Bereich bildet.

Vorzugsweise überlappen sich der erste Längsabschnitt der Schienenbahn und der zweite Längsabschnitt der Schienenbahn in einem Übergangsbereich lateral, sodass der Schlitten sich im Übergangsbereich auf beiden Längsabschnitten der Schienenbahn abstützen kann.

Vorzugsweise sind der Fahrzeuglängsträger und der Kipprahmenlängsträger in doppel-T-förmiger oder kastenförmiger Steg-Gurt-Ausführung mit Ober- und Untergurt ausgebildet und die Obergurte weisen wenigstens auf einer einen jeweiligen Längsabschnitt der Schienenbahn bildenden Teillänge einen rechteckigen Querschnitt auf.

In einer bevorzugten Ausführungsvariante weisen Längsabschnitte der Schienenbahn bildende Obergurte des Fahrzeuglängsträgers und des Kipprahmenlängsträgers zumindest auf einer Seite das Fahrzeug- und des Kipprahmenlängsträgers jeweils eine Seitenfläche auf, die mit entsprechenden Seitenflächen der anderen die jeweilige Schienenbahn bildenden Obergurte (seitenweise) derart fluchtet, dass sich in der Transportstellung des Kipprahmens eine durchgehende seitliche Führungsbahn für einen Schlitten ergibt. In einer typischen Ausführungsform mit jeweils zwei zueinander parallelen Fahrzeug- und Kipprahmenlängsträgern ist die Führungsbahn vorzugweise auf der - bezogen auf das Transportfahrzeug - Außenseite der jeweiligen Fahrzeug- und Kipprahmenlängsträger vorgesehen.

Weiterhin ist es bevorzugt, wenn Längsabschnitte der Schienenbahn bildende Obergurte des Fahrzeuglängsträgers und des Kipprahmenlängsträgers zumindest auf einer Seite des Fahrzeug- und des Kipprahmenlängsträgers jeweils einen entlang der Schienenbahn durchgehenden Überstand aufweisen, der in der Transportstellung des Kipprahmens eine entlang der Schienenbahn durchgängige vertikale Schlittenführung erlaubt. In einer typischen Ausführungsform mit jeweils zwei zueinander parallelen Fahrzeug- und Kipprahmenlängsträgern ist der Überstand vorzugweise auf der - bezogen auf das Transportfahrzeug - Außenseite der jeweiligen Fahrzeug- und Kipprahmenlängsträger vorgesehen.

Besonders bevorzugt ist ein Kippanhänger für Abrollbehälter,
- ausgerüstet mit einem Schlitten, um einen darauf platzierten Abrollbehälter bei der Fahrzeugbeladung von der Schlittenausgangsstellung im vorderen Anhängerbereich in eine Transport- oder Kippstellung am Heck des Anhängers und für die Fahrzeugentladung wieder in die Schlittenausgangsstellung zu bewegen,
- wobei der Schlitten rollend oder gleitend auf Schienenbahnen verlagerbar ist, die mittels Bögen oder abgewinkelter Abschnitte einen Höhenverlauf mit einer oder mehreren aufsteigenden und absenkenden Teilstrecken umsetzt,
- des Weiteren ausgestattet mit ein oder mehreren (zwischen dem Anhängerhauptrahmen und dem Kipprahmen angeordneten) Kippzylindern, die während des Kippvorganges zur Abrollbehälterentleerung einen Kipprahmen mit dem darauf befindlichen Abrollbehälter um die am Heck des Anhängers angeordnete Kipplagerung in die Kippschrägstellung und zurück schwenken,
und wobei
- die Oberbereiche der Anhängerlängsträger und der Kipprahmenlängsträger (gemeinsam und nacheinander) die Schienenbahnen der Schlittenbewegung bilden, wobei die Anhängerlängsträger im vorderen Teil des Anhängers die Schienen für die Schlittenbewegung darstellen und es einen Übergangsbereich gibt, indem die Schlittenbewegung von den Anhängerlängsträgern auf die Kipprahmenlängsträger übergeht,
- die Kipprahmen-Längsträger in ihrem Oberbereich dazu mit der anteiligen Höhenkontur der Schienenbahn versehen sind, und
- die Anhängerlängsträger im Bereich des Kipprahmens oben in der Höhe reduziert sind und die Kipprahmenlängsträger so über den Anhängerlängsträgern angeordnet und in der Höhe abgestimmt sind, dass sie die Schienenbahn des davor befindlichen Abschnitts der Anhängerlängsträger fortsetzen.

Im Übergangsbereich der Schienenbahn von Fahrzeug- zu Kipprahmenlängsträger sind die Obergurtstufung des Fahrzeuglängsträgers und der Beginn des Kipprahmenlängsträgers vorzugsweise schräg zugeschnitten.

Außerdem besteht im Übergangsbereich der Schienenbahn von Fahrzeug- zu Kipprahmenlängsträger zwischen den Obergurten der Stufung des Fahrzeuglängsträgers vorzugsweise eine nicht durchgängige erste Verbindung, die den für die vertikale Schlittenführung notwendigen Freiraum berücksichtigt.

Weiterhin besteht im Übergangsbereich der Schienenbahn von Anhänger- und Kipprahmenlängsträger zwischen dem Ober- und dem Untergurt des Kipprahmenlängsträgers vorzugsweise eine sich nicht über den gesamten Querschnitt erstreckende zweite Verbindung, die den für die vertikale Schlittenführung notwendigen Freiraum berücksichtigt.

Vorzugsweise sind die Obergurte von Fahrzeug- und Kipprahmenlängsträger im Übergangsbereich der Schienenbahn geschachtelt ausgeführt, d. h. in einem Abschnitt des Übergangsbereiches bilden die Oberbereiche von Fahrzeuglängsträger und Kipprahmen-längsträger gemeinsam die Schienenbahn, indem beispielsweise Teile der Obergurte von Fahrzeuglängsträger und Kipprahmenlängsträger nebeneinander und in der Höhe miteinander fluchtend angeordnet sind Auf diese Weise kann sich der Schlitten im Übergangsbereich auf den Längsabschnitten der Schienenbahn von Fahrzeug- und Kipprahmenlängsträger abstützen. Die Schachtelung der Obergurte im Übergangsbereich der Schienenbahn ist vorzugsweise durch ein oder mehrere Verstärkungsteile unterstützt oder wird durch diese verwirklicht. Der Übergangsbereich, in dem sich der erste Längsabschnitt der Schienenbahn und der zweite Längsabschnitt der Schienenbahn lateral überlappen, wenn sich der Kipprahmenlängsträger in seiner Transportstellung befindet, erstreckt sich vorzugsweise über eine Länge zwischen 2 cm und 40 cm, wobei der Übergangsbereich auch noch länger ausgeführt sein kann. Es ist auch möglich, dass sich der Übergangsbereich über einen längeren Abschnitt mit mehr als 40 cm, vorzugsweise mehr als 1 m Länge erstreckt, wobei Teile der Oberbereiche beider Längsträger - nämlich des Fahrzeuglängsträgers und des Kipprahmenlängsträgers - in dem Übergangsbereich parallel verlaufen und der Bereich, in dem der Oberbereich des Fahrzeuglängsträgers abgesenkt ist, entsprechend kürzer ausgeführt ist, wobei der Kipprahmenlängsträger zumindest abschnittsweise außermittig zum Fahrzeuglängsträger angeordnet ist.

Vorzugsweise sind die Obergurte oder beide Gurte des Fahrzeuglängsträgers und des Kipprahmenlängsträgers so außermittig zu den Stegen angeordnet, dass der Überstand auf der Seite der vertikalen Schlittenführung verkleinert und die für Verstärkungen nutzbare Gurtbreite vergrößert ist.

Ein Transportfahrzeug der beanspruchten Art bietet den Vorteil, dass das leichte Konstruktionsprinzip des Transportfahrzeugs ohne zusätzliche Laufrollenbahnen im Frontbereich umgesetzt wird, dass keine Überhöhung durch einen aufgesetzten Kipprahmen auftritt und eine weitere Höhenoptimierung durch eine Höhenkontur im Schienenbahnverlauf angewendet werden kann.

Die Erfindung soll nun anhand eines Ausführungsbeispiels mit Bezug auf die Figuren näher erläutert werden. Von den Figuren zeigt:
- Fig. 1:: ein Transportfahrzeug in Form eines Kippanhängers;
- Fig. 2:: das Transportfahrzeug aus Figur 1 ohne aufgesetzten Rollbehälter und in der Transportstellung des Kipprahmens;
- Fig. 3a:: Fahrzeuglängsträger und Kipprahmenlängsträger in der Transportstellung des Kipprahmens;
- Fig. 3b:: Fahrzeuglängsträger und Kipprahmenlängsträger in der Kippstellung des Kipprahmens;
- Fig. 4:: einen Fahrzeugrahmen in perspektivischer Darstellung;
- Fig. 5:: ein Detail aus Figur 4 in vergrößerter Darstellung, das einen Übergangsbereich zwischen Längsabschnitten der Schienenbahn zeigt; und
- Fig. 6:: einen schematischen Querschnitt durch den Fahrzeuglängsträger mit aufliegendem Kipprahmenlängsträger.

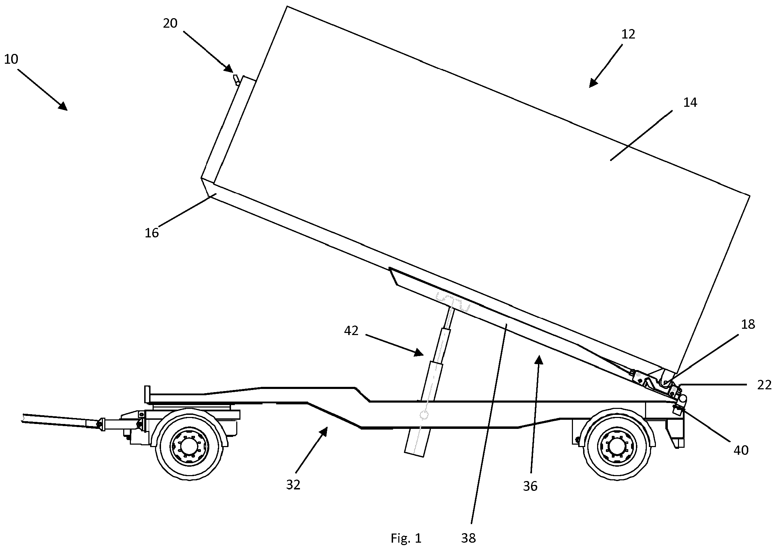

Figur 1 zeigt ein Transportfahrzeug 10 in Form eines Kippanhängers zum Transportieren von Rollbehältern, insbesondere Abrollbehältern. Ein Abrollbehälter 12 ist schematisch dargestellt.

Der Abrollbehälter 12 weist einen quaderförmigen Behälter 14 auf, der auf einen Unterrahmen 16 montiert ist und an einem Längsende ein Rollenpaar 18 aufweist. Am gegenüberliegenden Längsende weist der Abrollbehälter einen Aufnahmebügel 20 auf. Wenn der Behälter an dem Aufnahmebügel 20 beispielsweise mit Hilfe eines Ladegeräts angehoben wird, kann der Abrollbehälter 12 auf seinem Rollenpaar 18 rollen.

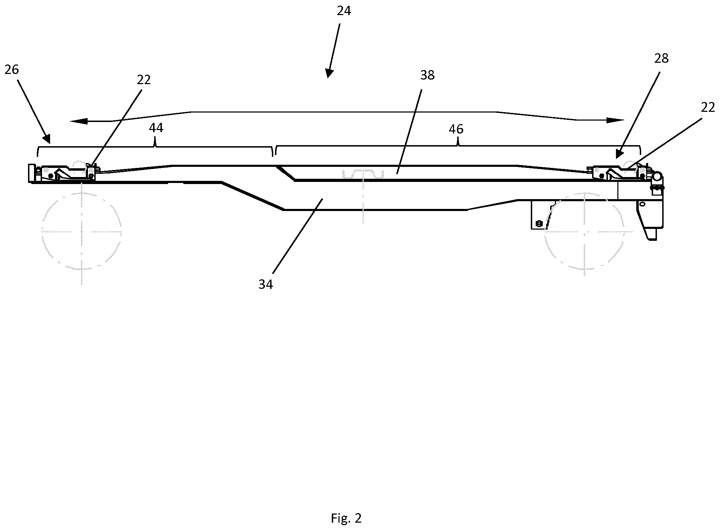

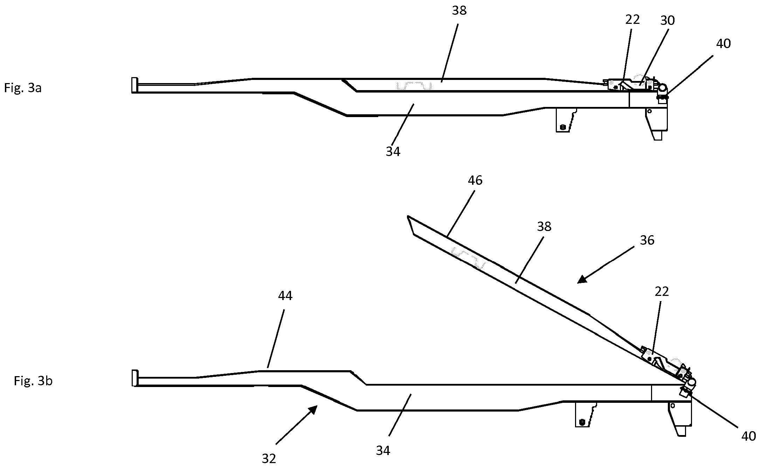

Das in Figur 2 dargestellte Transportfahrzeug 10 besitzt einen Schlitten 22 - gezeichnet in zwei Positionen - der auf einer Schienenbahn 24 von einer Behälteraufsetzposition 26 zu einer Behältertransportposition 28 zu bewegen ist. Die Rollen des Rollenpaars 18 befinden sich dabei in entsprechenden Vertiefungen 30 des Schlittens 22; siehe Figur 3.

Das in den Figuren 1 bis 3 abgebildete Transportfahrzeug ist ein Kippanhänger. Es besitzt einen Fahrzeugrahmen 32, der Fahrzeuglängsträger 34 aufweist. Um ein Kippen zu ermöglichen, verfügt das Transportfahrzeug 10 außerdem über einen Kipprahmen 36 mit Kipprahmenlängsträgern 38. Der Kipprahmen 36 ist im Heckbereich des Transportfahrzeugs 10 mittels einer Kipplagerung 40 um eine horizontal und quer zur Fahrzeuglängsachse verlaufende Schwenkachse schwenkbar und kann somit aus einer in Figuren 2 und 3a dargestellten Transportstellung in eine in Figuren 1 und 3b dargestellte Kippstellung geschwenkt werden. Hierzu ist der in der Figur 1 dargestellte Hydraulikzylinder 42 vorgesehen.

Wie Figur 2 zu entnehmen ist, liegt der jeweilige Kipprahmenlängsträger 38 in seiner Transportstellung auf dem entsprechenden Fahrzeuglängsträger 34 auf. Der Fahrzeuglängsträger 34 und der Kipprahmenlängsträger 38 sind so gestaltet, dass ihre Oberseiten gemeinsam eine durchgehende Schienenbahn 24 für den Schlitten 22 bilden. Konkret wird ein erster Längsabschnitt 44 der Schienenbahn 24 von der entsprechenden Oberseite des Fahrzeuglängsträgers 34 gebildet, während ein sich in Längsrichtung an den ersten Längsabschnitt 44 anschließender zweiter Längsabschnitt 46 der Schienenbahn 24 von der Oberseite des entsprechenden Kipprahmenlängsträgers 38 gebildet wird.

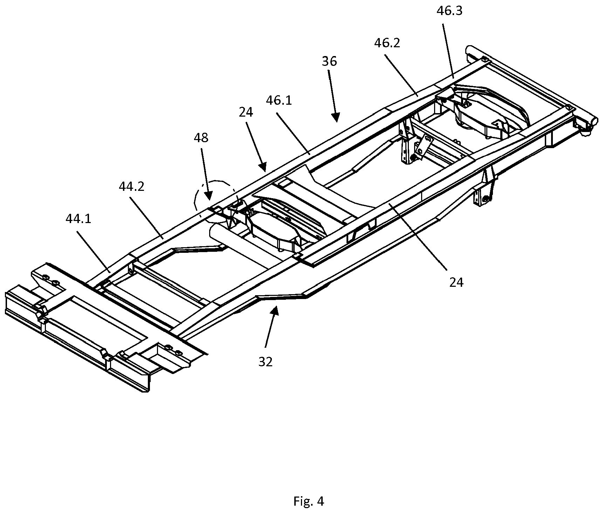

Wie Figur 2 ebenfalls zu entnehmen ist, weist die Schienenbahn 24 sowohl in ihrem ersten Längsabschnitt 44 als auch in ihrem zweiten Längsabschnitt 46 Teillängsabschnitte mit unterschiedlicher Steigung auf. So weist der von der Oberseite des Fahrzeuglängsträgers 34 gebildete erste Längsabschnitt 44 der Schienenbahn 24 einen ansteigenden Teillängsabschnitt 44.1 und einen annähernd horizontal verlaufenden Teillängsabschnitt 44.2 auf (siehe Figur 4). Der von der Oberseite des Kipprahmenlängsträgers 36 gebildete zweite Längsabschnitt 46 der Schienenbahn 24 besitzt einen sich unmittelbar an den horizontal verlaufenden Teillängsabschnitt 44.2 anschließenden ebenfalls horizontal verlaufenden ersten Teillängsabschnitt 46.1 auf. An diesen horizontal verlaufenden, ersten Teillängsabschnitt 46.1 schließt sich ein zweiter, abfallender Teillängsabschnitt 46.2 an, der ebenfalls von der Oberseite des Kipprahmenlängsträgers 38 gebildet wird.

Es sei angemerkt, dass die Schienenbahn 24 nicht notwendigerweise horizontal verlaufende Schienenbahnabschnitte aufzuweisen braucht. Es ist jedoch vorteilhaft, wenn der von einem jeweiligen Kipprahmenlängsträger 38 gebildete zweite Längsabschnitt 46 der Schienenbahn 24 einen in der Transportstellung des Kipprahmens 36 in etwa horizontal verlaufenden Transportabschnitt 46.3 aufweist. Die Schienenbahn 24 geht in einem Übergangsbereich 48 (siehe Figur 4) von dem von der Oberseite des Fahrzeuglängsträgers 34 gebildeten ersten Längsabschnitt 44 in den von der Oberseite des entsprechenden Kipprahmenlängsträger 38 gebildeten zweiten Längsabschnitt 46 über.

Wie den Figuren 3a und 3b zu entnehmen ist, kann der Kipprahmen 36 von einer Transportstellung (Figur 3a) in eine Kippstellung (Fig. 3b) geschwenkt werden.

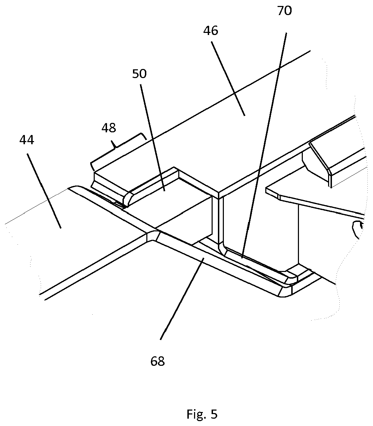

Wie Figur 4 und dem in Figur 5 dargestellten Detail aus Figur 4 zu entnehmen ist, überlappen sich der erste und der zweite Längsabschnitt der Schienenbahn 24 in dem Übergangsbereich 48 in lateraler Richtung, wenn sich der Kipprahmen 36 in seiner Transportstellung befindet. Dieses seitliche Überlappen des ersten Längsabschnitts 44 und des zweiten Längsabschnitts 46 der Schienenbahn 24 in dem Übergangsbereich 48 hat zur Folge, dass ein Schlitten 22 in dem Übergangsbereich 48 idealerweise sowohl von dem ersten Längsabschnitt 44 als auch von dem zweiten Längsabschnitt 46 der Schienenbahn 24 unterstützt wird. Dies erlaubt einen leichten Übergang von dem ersten Längsabschnitt 44 auf den zweiten Längsabschnitt 46 der Schienenbahn 24. In dem in Figur 5 dargestellten Ausführungsbeispiel ist ein massiver Verstärkungsklotz 50 vorgesehen, um den seitlichen Überlapp herzustellen.

Anders als in den Figuren 4 und 5 dargestellt, kann der Übergangsbereich auch so gestaltet sein, dass der erste Längsabschnitt 44 und der zweite Längsabschnitt 46 in dem Übergangsbereich 48 schräg oder spitz auslaufen, um so quer zur Bewegungsrichtung des Schlittens verlaufende Kanten zu vermeiden.

Des Weiteren kann sich der Übergangsbereich 48 über einen längeren Abschnitt erstrecken, wobei Teile der Oberbereiche beider Träger 34, 38 in diesem Bereich parallel verlaufen und vorzugsweise der Kipprahmenlängsträger 38 zumindest abschnittsweise außermittig zum Fahrzeuglängsträger 34 angeordnet ist. Der Bereich mit abgesenktem Fahrzeuglängsträger-Oberbereich kann entsprechend kürzer ausgeführt sein. In dieser speziellen Ausführung ist dieser Bereich größer als 40 cm bevorzugt größer als 1 Meter.

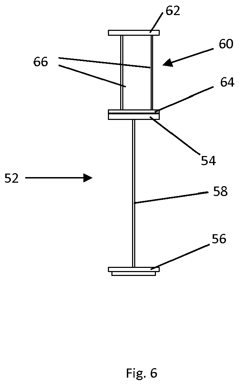

Wie den Figuren 4 und 6 zu entnehmen ist, ist der Fahrzeuglängsträger 34 als Doppel-T-Träger beziehungsweise I-Träger 52 mit einem Obergurt 54 und einem Untergurt 56 sowie einem Steg 58 gestaltet. Im Bereich des ersten Längsabschnitts 44 der Schienenbahn 24 bildet der Obergurt 54 des Fahrzeuglängsträgers 34 die Schienenbahn 24.

Der Kipprahmenlängsträger ist in dem dargestellten Ausführungsbeispiel als Kastenprofil 60 mit jeweils seitlich überstehenden Kastenobergurt 62 und Kastenuntergurt 64 sowie zwei Stegen 66 gestaltet. Die Oberseite des Kastenobergurts 62 bildet den zweiten Längsabschnitt 46 der Schienenbahn 24.

Sowohl der Fahrzeuglängsträger als auch der der Kipprahmenlängsträger können auch von anderen Steg-Gurt-Trägern gebildet sein. So kann der Fahrzeuglängsträger auch als Kasten mit zwei Stegen oder der Kipprahmenlängsträger als Doppel-T-Träger mit nur einem Steg ausgebildet sein.

In der Transportstellung des Kipprahmens 36 liegt der Kastenuntergurt 64 wenigstens stellenweise auf dem Obergurt 54 des Fahrzeuglängsträgers 34 auf, wie in Figur 6 dargestellt.

Wenigstens dort, wo sie einen jeweiligen Längsabschnitt 44 oder 46 der Schienenbahn 24 bilden, besitzen der Obergurt 54 des Fahrzeuglängsträgers 34 und der Obergurt 62 des Kipprahmenlängsträgers 38 einen seitlichen Überstand, so dass eine an sich bekannte vertikale Schlittenführung im Bereich des Überstands unter den Obergurt greifen kann. Die Obergurte 54 und 62 von Fahrzeugrahmenlängsträger 34 und Kipprahmen-längsträger 38 fluchten auch seitlich, um bekannte seitliche Schlittenführungen anwenden zu können.

Im Übergangsbereich 48 der Schienenbahn 24 von Fahrzeuglängsträger 34 zu Kipprahmenlängsträger 38 besitzt der Obergurt 54 des Fahrzeuglängsträgers 34 einen Verbindungsabschnitt 68 (erste Verbindung), der auf der in Figur 5 abgewandten Seite eine Ausnehmung besitzt, die einen für die vertikale Schlittenführung notwendigen Freiraum bewirkt.

Auch ein entsprechender Verbindungsgurt 70 (zweite Verbindung) zwischen dem Obergurt 62 und dem Untergurt 64 des Kipprahmenlängsträgers 38 erstreckt sich vorzugsweise nicht über den gesamten Querschnitt und bildet so einen für die vertikale Schlittenführung notwendigen Freiraum.

Damit sich eine in der Transportstellung des Kipprahmens 36 ohne Höhenversatz verlaufende Schienenbahn 24 ergibt, ist die Oberseite des jeweiligen Fahrzeuglängsträgers 34 unterhalb des zweiten vom Kipprahmenlängsträger gebildeten Längsabschnitts 46 der Schienenbahn 24 so abgesenkt, dass der Fahrzeuglängsträger 34 auf diese Weise einen Freiraum bereitstellt, der von dem Kipprahmenlängsträger 38 aufgefüllt wird, wenn sich der Kipprahmen 36 in seiner Transportstellung befindet (Figuren 2, 4 und 6). Dadurch kann die Schienenbahn 24 über ihre gesamte Länge ohne Höhenversatz und auch ohne seitlichen Versatz verlaufen. Zusammen mit den ansteigenden bzw. absteigenden Schienenbahnabschnitten, die auch als Bögen ausgeführt sein können, unterstützt dies ein leichtes Be- und Entladen des Transportfahrzeugs und bietet darüber hinaus Gewichtsvorteile.

### Bezugszeichenliste

- 10: Transportfahrzeug
- 12: Abrollbehälter
- 14: quaderförmiger Behälter
- 16: Unterrahmen
- 18: Rollenpaar
- 20: Aufnahmebügel
- 22: Schlitten
- 24: Schienenbahn
- 26: Behälteraufsetzposition
- 28: Behältertransportposition
- 30: Vertiefung des Schlittens
- 32: Fahrzeugrahmen
- 34: Fahrzeuglängsträger
- 36: Kipprahmen
- 38: Kipprahmenlängsträger
- 40: Kipplagerung
- 42: hydraulischer Kippzylinder
- 44: erster Längsabschnitt
- 44.1,44.2: Teillängsabschnitt
- 46: zweiter Längsabschnitt
- 46.1, 46.2: Teillängsabschnitt
- 46.3: Transportabschnitt
- 48: Übergangsbereich
- 50: Verstärkungsklotz
- 52: Doppel-T-Träger
- 54: Obergurt
- 56: Untergurt
- 58: Steg
- 60: Kastenprofil
- 62: Kastenobergurt
- 64: Kastenuntergurt
- 66: Stege
- 68: Verbindungsabschnitt
- 70: Verbindungsgurt

## Patentansprüche

1. Transportfahrzeug (10) zum Transportieren von Abrollbehältern (12), welches
- einen Schlitten (22), auf den ein Abrollbehälter zum Be- und/oder Entladen des Transportfahrzeugs (10) aufzusetzen ist,
- wenigstens einen in Fahrzeuglängsrichtung verlaufenden Fahrzeuglängsträger (34), der Teil eines Fahrzeugrahmens (32) ist und dessen Oberseite als in Fahrzeuglängsrichtung verlaufende Schienenbahn (24) genutzt wird, entlang der der Schlitten (22) von einer Behälteraufsetzposition (26) in Richtung einer Behältertransportposition (28) und umgekehrt zu bewegen ist, **dadurch gekennzeichnet dass** das Transportfahrzeug
einen Kipprahmen (36) mit wenigstens einem Kipprahmenlängsträger (38) aufweist,
der im Bereich eines Fahrzeughecks um eine horizontal und quer zur Fahrzeuglängsachse verlaufend Schwenkachse aus einer Transportstellung in eine Kippstellung schwenkbar ist,
wobei der Fahrzeuglängsträger einen ersten Längsabschnitt (44) einer in Fahrzeuglängsrichtung verlaufenden Schienenbahn (24) bildet und
eine Oberseite des Kipprahmenlängsträgers (38) einen zweiten Längsabschnitt (46) der Schienenbahn (24) bildet, der sich in der Transportstellung des Kipprahmenlängsträgers (38) in Fahrzeuglängsrichtung unmittelbar an den von dem Fahrzeuglängsträger (34) gebildeten ersten Längsabschnitt (44) der Schienenbahn (24) anschließt,
wobei die Schienenbahn (24) in ihrem von der Oberseite des Kipprahmenlängsträgers (38) gebildeten zweiten Längsabschnitt (46) Teilabschnitte mit unterschiedlicher Steigung aufweist.

2. Transportfahrzeug nach Anspruch 1, **dadurch gekennzeichnet, dass** die Schienenbahn (24) in der Transportstellung des Kipprahmenlängsträgers (38) wenigstens einen ansteigenden oder absteigenden Teilabschnitt und wenigstens einen horizontal verlaufenden Teilabschnitt aufweist, wobei die von Fahrzeuglängsträger (34) und Kipprahmenlängsträger (38) gemeinsam gebildete Schienenbahn (24) mittels Bögen oder abgewinkelter Abschnitte einen teilweise an- und absteigenden Höhenverlauf aufweist.

3. Transportfahrzeug nach Anspruch 1 oder 2, **dadurch gekennzeichnet, dass** das Transportfahrzeug (10) ein Anhänger ist.

4. Transportfahrzeug nach wenigstens einem der Ansprüche 1 bis 3, **dadurch gekennzeichnet, dass** die Oberseite des Fahrzeuglängsträgers (34) unterhalb des von dem Kipprahmenlängsträger (38) gebildeten zweiten Längsabschnitts (46) der Schienenbahn (24) einen Verlauf hat, der zumindest abschnittsweise einem Verlauf der Unterseite des Kipprahmenlängsträgers (38) entspricht, so dass die Unterseite des Kipprahmenlängsträgers (38) auf der Oberseite des Fahrzeuglängsträgers (34) zumindest abschnittsweise direkt oder über Auflagen indirekt aufliegt, wenn sich der Kipprahmenlängsträger (38) in seiner Transportstellung befindet.

5. Transportfahrzeug nach wenigstens einem der Ansprüche 1 bis 4, **dadurch gekennzeichnet, dass** sich der erste Längsabschnitt (44) der Schienenbahn und der zweite Längsabschnitt (46) der Schienenbahn (24) in einem Übergangsbereich (48) lateral überlappen, wenn sich der Kipprahmenlängsträger in seiner Transportstellung befindet, so, dass der Schlitten sich im Übergangsbereich auf beiden Längsabschnitten der Schienenbahn abstützen kann.

6. Transportfahrzeug nach Anspruch 5, **dadurch gekennzeichnet, dass** sich der Übergangsbereich (48), in dem sich der der erste Längsabschnitt (44) der Schienenbahn und der zweite Längsabschnitt (46) der Schienenbahn (24) lateral überlappen, wenn sich der Kipprahmenlängsträger in seiner Transportstellung befindet, über eine Länge zwischen 2 cm und 40 cm erstreckt.

7. Transportfahrzeug nach Anspruch 5, **dadurch gekennzeichnet, dass** sich der Übergangsbereich (48) über einen längeren Abschnitt mit mehr als 40 cm, insbesondere mehr als 1 Meter Länge erstreckt, wobei Teile der Oberbereiche des Fahrzeuglängsträgers (34) und des Kipprahmenlängsträgers (38) in diesem Übergangsbereich parallel verlaufen.

8. Transportfahrzeug nach wenigstens einem der Ansprüche 1 bis 7, **dadurch gekennzeichnet, dass** der Fahrzeuglängsträger (34) und der Kipprahmenlängsträger (38) in doppel-T-förmiger oder kastenförmiger Steg-Gurt-Ausführung mit Ober- und Untergurt ausgebildet sind und die Obergurte (54, 62) wenigstens auf derjenigen Teillänge einen rechteckigen Querschnitt aufweisen, die einen jeweiligen Längsabschnitt (44, 46) der Schienenbahn (24) bildet.

9. Transportfahrzeug nach wenigstens einem der Ansprüche 1 bis 8, **dadurch gekennzeichnet, dass** Längsabschnitte (44, 46) der Schienenbahn (24) bildende Obergurte (54, 62) des Fahrzeuglängsträgers (34) und des Kipprahmenlängsträgers (38) zumindest auf einer Seite das Fahrzeug- und des Kipprahmenlängsträgers jeweils eine Seitenfläche aufweisen, die mit entsprechenden Seitenflächen der übrigen die jeweilige Schienenbahn bildenden Obergurte derart fluchtet, dass sich in der Transportstellung des Kipprahmens eine durchgehende seitliche Führungsbahn für einen Schlitten ergibt.

10. Transportfahrzeug nach wenigstens einem der Ansprüche 1 bis 9, **dadurch gekennzeichnet, dass** Längsabschnitte der Schienenbahn (24) bildende Obergurte (54, 62) des Fahrzeuglängsträgers (34) und des Kipprahmenlängsträgers (38) zumindest auf einer Seite das Fahrzeug- und des Kipprahmenlängsträgers jeweils einen entlang der Schienenbahn durchgehenden Überstand aufweisen, der in der Transportstellung des Kipprahmens eine entlang der Schienenbahn durchgängige vertikale Schlittenführung erlaubt.

## Claims

1. Transport vehicle (10) for transporting roll-off containers (12), comprising
- a slide (22) upon which a roll-off container is to be placed for loading and/or unloading the transport vehicle (10),
- at least one vehicle longitudinal chassis beam (34) extending in the longitudinal direction of the vehicle, which is part of a vehicle frame (32) and the upper side of which is used as a rail guide (24) extending in the longitudinal direction of the vehicle, along which the slide (22) is moved from a container placement position (26) in the direction of a container transport position (28) and vice versa, **characterized in that** the transport vehicle
has a tilting frame (36) with at least one tilting frame longitudinal beam (38)
which can be pivoted, in the area of a vehicle rear, around a pivot axis running horizontally and transversely to the longitudinal axis of the vehicle from a transport position to a tilt position,
wherein,
the vehicle longitudinal chassis beam forms a first longitudinal section (44) of a rail guide (24) running in the longitudinal direction of the vehicle, and
an upper side of the tilting frame longitudinal beam (38) forms a second longitudinal section (46) of the rail guide (24) which, when the tilting frame longitudinal beam (38) is in the transport position, directly adjoins, in the vehicle longitudinal direction, the first longitudinal section (44) of the rail guide (24) formed by the vehicle longitudinal chassis beam (34),
wherein the rail guide (24) has sections with different grades in its second longitudinal section (46) formed by the upper side of the tilting frame longitudinal beam (38).

2. Transport vehicle according to claim 1, **characterized in that** the rail guide (24), when the tilting frame longitudinal beam (38) is in the transport position, has at least one ascending or descending section and at least one section that runs horizontally, wherein the rail guide (24) formed jointly by the vehicle longitudinal chassis beam (34) and the tilting frame longitudinal beam (38) has a partially ascending and descending height profile because of arches or angled sections.

3. Transport vehicle according to claim 1 or 2, **characterized in that** the transport vehicle (10) is a trailer.

4. Transport vehicle according to at least one of claims 1 to 3, **characterized in that** the upper side of the vehicle longitudinal chassis beam (34) below the second longitudinal section (46) of the rail guide (24) formed by the tilting frame longitudinal beam (38) runs in a way that, at least in sections, corresponds to the way the bottom side of the tilting frame longitudinal beam (38) runs, so that the bottom side of the tilting frame longitudinal beam (38) is seated directly, at least in sections, or indirectly by way of supports, on the upper side of the vehicle longitudinal chassis beam (34) when the tilting frame longitudinal beam (38) is in its transport position.

5. Transport vehicle according to at least one of claims 1 to 4, **characterized in that** the first longitudinal section (44) of the rail guide and the second longitudinal section (46) of the rail guide (24) overlap laterally in a transition area (48) when the tilting frame longitudinal beam is in its transport position, so that the slide can be supported on both longitudinal sections of the rail guide in the transition area.

6. Transport vehicle according to claim 5, **characterized in that** the transition area (48), where the first longitudinal section (44) of the rail guide and the second longitudinal section (46) of the rail guide (24) overlap laterally when the tilting frame longitudinal beam is in its transport position, extends across a length of between 2 cm and 40 cm.

7. Transport vehicle according to claim 5, **characterized in that** the transition area (48) extends across a longer section of more than 40 cm, in particular more than 1 meter in length, with parts of the upper areas of the vehicle longitudinal chassis beam (34) and the tilting frame longitudinal beam (38) running parallel in this transition area.

8. Transport vehicle according to at least one of claims 1 to 7, **characterized in that** the vehicle longitudinal chassis beam (34) and the tilting frame longitudinal beam (38) are implemented in a double-T-shaped or box-shaped web-flange design with upper and lower flanges, and the upper flanges (54, 62) have a rectangular cross-section at least on the partial length that forms a respective longitudinal section (44, 46) of the rail guide (24).

9. Transport vehicle according to at least one of claims 1 to 8, **characterized in that** longitudinal sections (44, 46) of the rail guide (24) forming upper flanges (54, 62) of the vehicle longitudinal chassis beam (34) and of the tilting frame longitudinal beam (38) each have, at least on one side of the vehicle longitudinal chassis beam and tilting frame longitudinal beam, a side surface that is aligned with corresponding side surfaces of the remaining upper flanges, which form the respective rail guide, in such a way that a continuous lateral guideway for a slide is formed when the tilting frame is in the transport position.

10. Transport vehicle according to at least one of claims 1 to 9, **characterized in that** upper flanges (54, 62) of the vehicle longitudinal chassis beam (34) and of the tilting frame longitudinal beam (38) that form longitudinal sections of the rail guide (24) each have, at least on one side of the vehicle longitudinal chassis beam and tilting frame longitudinal beam, a continuous overhang along the rail guide, which allows for continuous vertical guiding of the slide along the rail guide when the tilting frame is in the transport position.

## Revendications

1. Véhicule (10) de transport pour le transport de conteneurs (12) roulants, qui a
- un chariot (22), sur lequel un conteneur roulant peut être posé pour le chargement et/ou le déchargement du véhicule (10) de transport,
- au moins un longeron (34) de véhicule, qui s'étend dans la direction longitudinale du véhicule, qui fait partie d'un châssis (32) du véhicule et dont la face supérieure est utilisée comme voie (24) à rail s'étendant dans la direction longitudinale du véhicule, le long de laquelle le chariot (22) peut être déplacé d'une position (26) de pose de conteneur en direction d'une position (28) de transport de conteneur et inversement, **caractérisé en ce que** le véhicule de transport a un cadre (36) de basculement ayant au moins un longeron (38) de cadre de basculement,
qui, dans la région d'une partie arrière du véhicule peut pivoter autour d'un axe de pivotement, s'étendant horizontalement et transversalement à l'axe longitudinal du véhicule, d'une position de transport à une position de basculement
dans lequel
le longeron du véhicule forme un premier tronçon (44) longitudinal d'une voie (24) à rail s'étendant dans la direction longitudinale du véhicule et
un côté supérieur du longeron (38) du cadre de basculement forme un premier tronçon (44) longitudinal et un deuxième tronçon (46) longitudinal de la voie (24) à rail, qui, dans la position de transport du longeron (38) du cadre de basculement, se raccorde dans la direction longitudinale du véhicule directement au premier tronçon (44) longitudinal, formé par le longeron (34) du véhicule, de la voie (24) à rail,
dans lequel la voie (24) à rail a dans son deuxième tronçon (46) longitudinal, formé par le côté supérieur du longeron du cadre de basculement, des tronçons partiels de pente différente.

2. Véhicule de transport suivant la revendication 1, **caractérisé en ce que** la voie (24) à rail a, dans la position de transport du longeron (38) de cadre de basculement, au moins un tronçon partiel ascendant ou descendant et au moins un tronçon partiel s'étendant horizontalement, la voie (24) à rail, formée conjointement par le longeron (34) du véhicule et le longeron (38) du cadre de basculement, ayant un tracé en hauteur partiellement ascendant et descendant au moyen d'arceaux ou de tronçons coudés.

3. Véhicule de transport suivant la revendication 1 ou 2, **caractérisé en ce que** le véhicule (10) de transport est une remorque.

4. Véhicule de transport suivant au moins l'une des revendications 1 à 3, **caractérisé en ce que** le côté supérieur du longeron (34) du véhicule a, en-dessous du deuxième tronçon (46) longitudinal, formé par le longeron (38) du cadre de basculement, de la voie (24) à rail, un tracé, qui correspond au moins par tronçon à un tracé du côté inférieur du longeron (38) du cadre de basculement, de sorte que le côté inférieur du longeron (38) du cadre de basculement s'applique au moins par endroits directement ou indirectement par des appuis au côté supérieur du longeron (34) du véhicule, lorsque le longeron (38) du cadre de basculement se trouve dans sa position de transport.

5. Véhicule de transport suivant au moins l'une des revendications 1 à 4, **caractérisé en ce que** le premier tronçon (44) longitudinal de la voie à rail et le deuxième tronçon (46) longitudinal de la voie (24) à rail se chevauchent latéralement dans une partie (48) de transition, lorsque le longeron du cadre de basculement se trouve dans sa position de transport, de manière à ce que le chariot puisse s'appuyer dans sa partie de transition sur deux tronçons longitudinaux de la voie à rail.

6. Véhicule de transport suivant la revendication 5, **caractérisé en ce que** la partie (48) de transition, dans laquelle le premier tronçon (44) longitudinal de la voie à rail et le deuxième tronçon (46) longitudinal de la voie (24) à rail se chevauchent latéralement, s'étend, lorsque le longeron du cadre de basculement se trouve dans sa position de transport, sur une longueur comprise entre deux centimètres et quarante centimètres.

7. Véhicule de transport suivant la revendication 5, **caractérisé en ce que** la partie (48) de transition s'étend sur un tronçon assez long d'une longueur de plus de 40 centimètres, notamment de plus de 1 mètre, des parties de la région supérieure du longeron (34) du véhicule et du longeron (38) du cadre de basculement s'étendant parallèlement dans cette partie de transition.

8. Véhicule de transport suivant au moins l'une des revendications 1 à 7, **caractérisé en ce que** le longeron (34) du véhicule et le longeron (38) du cadre de basculement sont constitués en forme de double T ou suivant une réalisation âme-membrure en forme de caisson ayant une membrure supérieure et une membrure inférieure et les membrures (54, 62) supérieures ont au moins une section transversale rectangulaire sur les longueurs partielles, qui forment un tronçon (44, 46) longitudinal respectif de la voie (24) à rail.

9. Véhicule de transport suivant au moins l'une des revendications 1 à 8, **caractérisé en ce que** des membrures (54, 62) supérieures, formant des tronçons (44, 46) longitudinaux de la voie (24) à rail, du longeron (34) du véhicule et du longeron (38) du cadre de basculement ont au moins d'un côté du longeron du véhicule et du longeron du cadre de basculement respectivement une surface latérale, qui est à affleurement avec des surfaces latérales correspondantes des membrures supérieures formant le reste de la voie rail, de manière à obtenir, dans la position de transport du cadre de basculement, une voie de guidage latérale continue pour un chariot.

10. Véhicule de transport suivant au moins l'une des revendications 1 à 9, **caractérisé en ce que** les membrures (54, 62), formant des tronçons longitudinaux de la voie (24) à rail, du longeron (34) du véhicule et du longeron (38) du cadre basculant ont au moins d'un côté du longeron du véhicule et du longeron du cadre basculant respectivement un porte-à-faux continu le long de la voie à rail, qui permet, dans la position de transport du cadre basculant, un guidage vertical continu du chariot le long de la voie à rail.
